Europäisches Patentamt

(19) European Patent Office

Office européen des brevets

(11) Numéro de publication : **0 340 059 B1**

⑫　　　　　　　　**FASCICULE DE BREVET EUROPEEN**

(45) Date de publication du fascicule du brevet :
04.09.91 Bulletin 91/36

(21) Numéro de dépôt : **89400915.8**

(22) Date de dépôt : **04.04.89**

(51) Int. Cl.⁵ : **B60T 13/52**

(54) **Servomoteur d'assistance au freinage à saut réglable.**

(30) Priorité : **28.04.88 FR 8805654**

(43) Date de publication de la demande :
**02.11.89 Bulletin 89/44**

(45) Mention de la délivrance du brevet :
**04.09.91 Bulletin 91/36**

(84) Etats contractants désignés :
**DE ES FR GB IT**

(56) Documents cités :
**EP-A- 0 004 477**
**EP-A- 0 159 148**
**EP-A- 0 252 267**

(73) Titulaire : **BENDIX EUROPE Services
Techniques S.A.
126 rue de Stalingrad
F-93700 Drancy (FR)**

(72) Inventeur : **Perez, Miguel
BENDIX FRANCE S.A. 126 Rue de Stalingrad
F-93700 Drancy (FR)**

(74) Mandataire : **Lejet, Christian
Bendix Europe Service Techniques Service
Brevets 126 rue de Stalingrad
F-93700 Drancy (FR)**

EP 0 340 059 B1

## Description

L'invention concerne un servomoteur d'assistance au freinage et s'applique avantageusement à tous les véhicules automobiles dont le circuit de freinage est équipé d'un tel servomoteur.

Un servomoteur d'assistance au freinage comprend généralement une tige de commande qui se déplace vers l'avant lorsque le conducteur du véhicule actionne la pédale de frein. Ce déplacement de la tige de commande est transmis à un plongeur qui actionne des moyens d'assistance. Généralement, ces moyens d'assistance comprennent une valve trois voies dont l'actionnement permet d'interrompre la communication entre une chambre avant et une chambre arrière du servomoteur et de mettre cette dernière chambre à l'atmosphère. Etant donné que la chambre avant est normalement sous vide, une force d'assistance est ainsi exercée sur le piston qui sépare les deux chambres. Le piston se déplace alors vers l'avant en agissant sur une tige de poussée servant à actionner le maître-cylindre du circuit de freinage.

Habituellement, le piston servant à transmettre la force d'assistance à la tige de poussée agit sur cette dernière au travers d'un disque de réaction réalisé en un matériau déformable tel qu'un élastomère. Au repos, un faible jeu existe entre l'extrémité avant du plongeur et le disque de réaction. Lorsque le conducteur du véhicule commence à actionner le pédale de frein, ce faible jeu permet au plongeur de se déplacer immédiatement vers l'avant pour commander les moyens d'assistance et assurer une réponse immédiate des freins.

La transmission à la tige de poussée, au travers du disque de réaction, de la force d'assistance exercée sur le piston a pour effet de comprimer axialement la partie périphérique du disque de réaction proportionnellement à la force d'assistance. Cette compression de la partie périphérique du disque de réaction a pour conséquence une déformation de la partie centrale de ce disque vers la face avant du plongeur. Lorsque la force d'assistance dépasse un certain seuil, le jeu existant initialement au repos entre le disque de réaction et la face avant du plongeur est rattrapé, de sorte que le plongeur est en contact avec le disque de réaction et que ce dernier renvoie vers la pédale de frein une force de réaction représentative de l'effort de freinage appliqué sur les freins du véhicule. Cet agencement bien connu permet au conducteur de doser l'effort de freinage qu'il exerce sur la pédale en fonction de la résistance qu'il rencontre, qui augmente avec cet effort.

Il ressort de l'explication qui précède que la réaction à la pédale ne commence à apparaître que lorsque la force d'assistance engendrée par l'actionnement de la pédale de frein dépasse un certain seuil. Ce seuil est appelé le "saut" du servomoteur. Il constitue une caractéristique importante du servomoteur. En effet, si l'existence du saut est imposée pour une réponse immédiate des freins lors d'un actionnement de la pédale, les constructeurs de véhicules automobiles souhaitent généralement que la valeur de ce saut reste dans certaines limites pour que l'assistance n'atteigne pas une valeur trop grande sans augmentation de la réaction à la pédale.

Cependant, compte tenu notamment des tolérances de fabrication des différentes pièces constituant le servomoteur, il peut exister des différences importantes dans la valeur du saut, d'un servomoteur à un autre. De plus, il n'existe actuellement aucun moyen pour maîtriser ou régler la valeur de ce saut, de sorte que les exigences précédemment mentionnées ne sont pas toujours satisfaites.

La présente invention a précisément pour objet un servomoteur d'assistance au freinage perfectionné, dans lequel la valeur du saut peut être réglée, sans que le coût du servomoteur s'en trouve sérieusement augmenté.

Selon l'invention, ce résultat est obtenu au moyen d'un servomoteur d'assistance au freinage comprenant une enveloppe extérieure d'axe donné, dans laquelle sont montés de façon mobile selon ledit axe un piston creux d'assistance, une tige de commande portant un plongeur logé dans le piston, et une tige de poussée, des moyens d'assistance logés dans ladite enveloppe étant commandés par un déplacement du plongeur vers l'avant et ayant pour effet de déplacer le piston vers l'avant, un disque de réaction en un matériau déformable étant interposé entre une face avant annulaire du piston et une face arrière de la tige de poussée, de telle sorte qu'un jeu est normalement formé au repos entre une face avant du plongeur et ce disque de réaction, caractérisé par le fait qu'un moyen est prévu pour appliquer sur le disque de réaction une précontrainte réglable entre la face avant annulaire du piston et la face arrière de la tige de poussée, de façon à régler ledit jeu.

Selon un mode de réalisation particulier de l'invention, ledit moyen comprend un capot vissé sur le piston autour de la face avant annulaire de ce dernier, ce capot coiffant une plaque formée sur la tige de poussée et comportant la face arrière de cette dernière, ainsi que le disque de réaction.

Un mode de réalisation particulier de l'invention va maintenant être décrit, à titre d'exemple nullement limitatif, en se référant aux dessins annexés dans lesquels :

    — la figure 1 est une vue de côté, en coupe longitudinale, représentant le partie centrale d'un servomoteur d'assistance au freinage équipé de moyens de réglage du saut conforme à l'invention ;

    — la figure 2 est une vue en coupe longitudinale représentant à plus grande échelle le montage du disque de réaction sur le piston du servomoteur conformément à l'invention ; et

— la figure 3 est une courbe représentant schématiquement l'évolution de la force $F_S$ exercée sur la tige de poussée à la sortie du servomoteur en fonction de la force $F_E$ exercée sur la tige de commande à l'entrée du servomoteur.

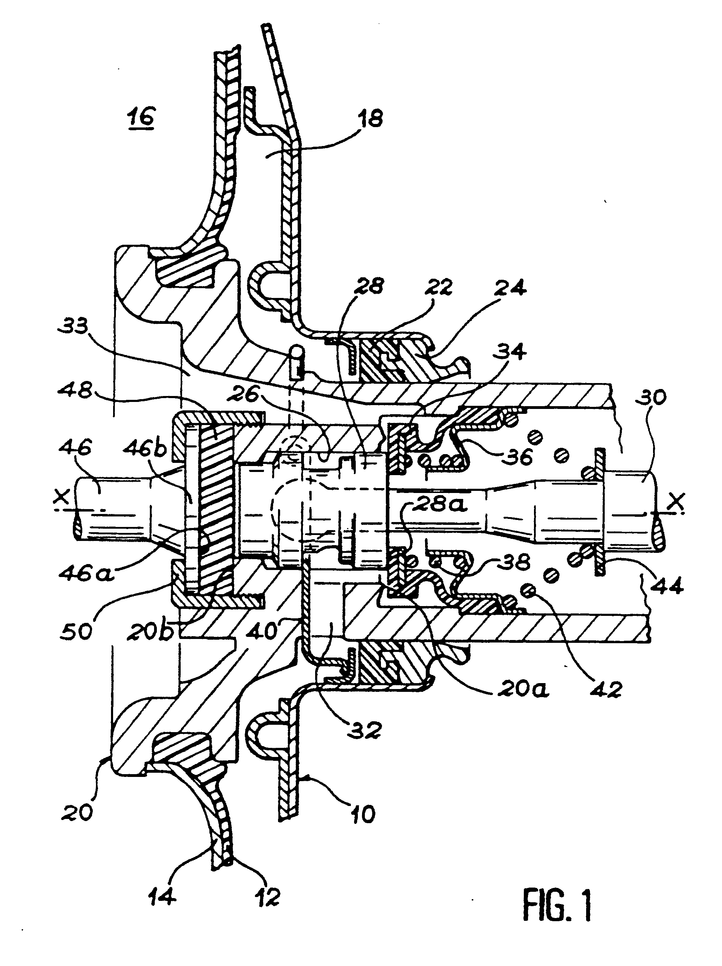

La figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la figure 1 comprend une enveloppe extérieure 10 en forme de coquille, présentant une symétrie de révolution autour d'un axe X-X. Seule la partie centrale arrière de cette enveloppe 10 est représentée sur la figure 1.

Une membrane souple en élastomère 12, renforcée dans sa partie centrale par un disque support métallique 14, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X du servomoteur. Ce piston creux 20 se prolonge vers l'arrière sous la forme d'une partie tubulaire qui traverse de façon étanche la paroi arrière de l'enveloppe 10. L'étanchéité de cette traversée est assurée par un joint d'étanchéité annulaire armé 22 qui est fixé par une bague 24 dans une partie centrale tubulaire prolongeant vers l'arrière la paroi arrière de l'enveloppe 10.

Un ressort de compression (non représenté) interposé entre le piston 20 et la paroi avant (non représentée) de l'enveloppe extérieure 10 maintient normalement le piston dans une position arrière de repos illustrée sur la figure 1, dans laquelle la chambre arrière 18 présente son volume minimum et la chambre avant 16 son volume maximum.

Dans sa partie centrale située entre la partie arrière tubulaire et la partie avant dans laquelle est fixée la membrane 12, le piston 20 présente un alésage étagé 26 dans lequel est reçu en coulissement un plongeur 28 présentant également une symétrie de révolution autour de l'axe X-X. L'extrémité avant d'une tige de commande 30 du servomoteur, disposée également selon l'axe X-X, est montée rotulante dans le plongeur 28. L'extrémité arrière (non représentée) de cette tige 30, qui fait saillie à l'extérieur de la partie tubulaire du piston 20, est commandée directement par la pédale de frein du véhicule.

L'espace annulaire délimité entre la tige de commande 30 et la partie tubulaire du piston 20 débouche vers l'extérieur, à l'arrière du servomoteur. Vers l'avant, ce même espace annulaire peut communiquer avec le chambre arrière 18 au travers d'un passage radial 32 formé dans le partie centrale du piston, lorsque des moyens d'assistance commandés par le plongeur 28 sont actionnés.

De façon classique, ces moyens d'assistance comprennent une valve trois voies comportant un clapet annulaire 34 monté dans la partie tubulaire du piston et deux sièges de valve annulaires 20a et 28a formés respectivement sur la partie centrale du piston 20 et sur le plongeur 28.

Le clapet 34 constitue l'extrémité avant, de plus petit diamètre, d'un manchon souple en élastomère dont l'extrémité arrière se termine par un bourrelet monté de façon étanche à l'intérieur de la partie tubulaire du piston 20. Ce bourrelet est maintenu en place par une coupelle métallique 36, sur laquelle prend appui un ressort de compression 38 tendant à déplacer le clapet 34 vers l'avant.

Le siège de valve annulaire 28a est formé sur la face d'extrémité arrière du plongeur 28. De façon comparable, le siège de valve annulaire 20a est formé sur la face d'extrémité arrière de la partie centrale du piston 20, autour du siège 28a. Selon la position du plongeur 28 à l'intérieur du piston 20, cet agencement permet au clapet 34 d'être constamment en appui étanche avec l'un au moins des sièges de valve 28a et 20a sous l'action du ressort 38.

Un second passage 33 est formé dans la partie centrale du piston 20, approximativement parallèlement à son axe X-X, pour faire communiquer la chambre avant 16 du servomoteur avec une chambre annulaire formée autour du clapet 34, à l'intérieur de la partie tubulaire du piston. Lorsque le plongeur 28 occupe sa position arrière de repos illustrée sur la figure 1, dans laquelle le clapet 34 est en appui étanche sur le siège 28a du plongeur et écarté du siège 20a du piston, les chambre avant 16 et arrière 18 du servomoteur communiquent ainsi entre elles par les passages 33 et 32.

D'une manière en elle-même connue, au moins un organe de butée 40 monté dans la partie centrale du piston 20 délimite la course axiale du plongeur 28 à l'intérieur de ce dernier. Le plongeur 28 est normalement maintenu dans la position arrière de repos définie par l'organe 40 au moyen d'un ressort de compression 42 interposé entre la coupelle 36 et une rondelle 44 elle-même en appui sur un épaulement formé sur la tige de commande 30.

Dans sa partie centrale, le piston 20 comprend une face avant annulaire 20b au centre de laquelle débouche l'alésage 26. Cette face avant annulaire 20b du piston 20 agit sur une face arrière 46a d'une tige de poussée 46, au travers d'un disque de réaction 48 en un matériau déformable tel qu'un élastomère. De façon plus précise, la tige de poussée 46 et le disque de réaction 48 sont disposés selon l'axe X-X du servomoteur, dans le prolongement de la tige de commande 30 et du plongeur 28.

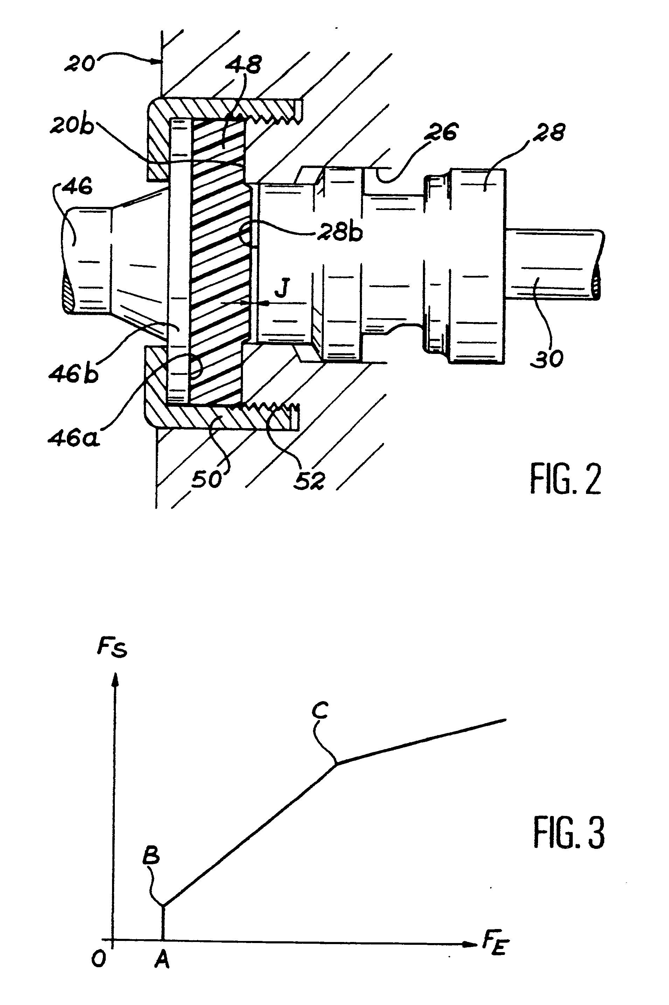

Comme l'illustre mieux la figure 2, la surface arrière 46a de la tige de poussée 46 est formée sur une plaque en forme de disque 46b constituant l'extrémité arrière de la tige 46.

Conformément à l'invention, la plaque 46b ainsi que le disque de réaction 48 sont coiffés par un capot 50 centré sur l'axe X-X du servomoteur et vissé sur un filetage 52 formé sur la partie centrale du piston 20, autour de la face avant annulaire 20b de ce dernier.

Cet agencement permet, en vissant plus ou moins le capot 50 sur le filetage 52, d'appliquer sur la partie périphérique du disque de réaction 48 une précontrainte réglable, entre les faces en regard 20b et 46a du piston et de la tige de poussée.

Comme l'illustre la figure 2, selon l'importance de la précontrainte ainsi exercée sur la partie périphérique du disque de réaction 48, la partie centrale de ce dernier se déforme plus ou moins vers la face avant 28b du plongeur 28. Il est ainsi possible de régler avec précision le jeu J existant entre cette face avant 28b du plongeur et le disque de réaction 48.

Si l'on désigne par $F_E$ la force appliquée à l'entrée du servomoteur sur la tige de commande 30 et par $F_S$ la force exercée par la tige de poussée 46 à la sortie du servomoteur, le fonctionnement de ce dernier va maintenant être décrit en se référant à la courbe de la figure 3.

Lorsque le servomoteur est installé sur un véhicule, la chambre avant 16 communique en permanence avec une source de vide.

Dans un premier temps, l'actionnement de la pédale de frein par le conducteur a pour effet de rattraper la course morte existant initialement entre le clapet 34 et le siège de valve 20a formé sur le piston 20. Les chambres avant 16 et arrière 18 du servomoteur sont alors isolées l'une de l'autre. Dans cette première phase de l'actionnement du servomoteur, qui correspond au segment OA sur la figure 3, la force exercée sur la tige de commande 30 n'engendre aucune force sur la tige de poussée 46 à la sortie du servomoteur.

Dans une deuxième phase de l'actionnement du frein correspondant au segment AB sur la figure 3, le plongeur 28 est déplacé suffisamment vers l'avant pour que le clapet 34 soit en contact étanche avec le siège 20a du piston et espacé du siège 28a du plongeur. Dans ces conditions, le chambre arrière 18 du servomoteur est isolée de la chambre avant 16 et communique avec l'atmosphère. Une force d'assistance est donc engendrée, qui tend à déplacer le piston 20 vers l'avant. Ce déplacement est transmis à la tige de poussée 46 par le disque de réaction 48.

Au cours de cette deuxième phase d'actionnement des freins, la force d'assistance exercée par le piston 20 ne déforme pas suffisamment le disque de réaction 48 pour que ce dernier remplisse totalement l'espace correspondant au jeu J qui le sépare initialement du plongeur 28. Par conséquent, la force de sortie $F_S$ appliquée au maître-cylindre par la tige de poussée 46 augmente brutalement jusqu'à la valeur correspondant au point B sur la figure 3, alors que la force exercée sur la tige de commande 30 reste inchangée.

La point B sur la figure 3 correspond au seuil pour lequel la force d'assistance engendrée dans le servomoteur et exercée sur le disque de réaction 48 par le piston 20 devient suffisante pour que la partie centrale du disque de réaction vienne au contact de la face avant 28b du plongeur 28, c'est-à-dire lorsque le jeu J est rattrapé. La longueur du segment AB correspond au saut du servomoteur. Conformément à l'invention, il est possible de maîtriser et de régler ce saut en vissant plus ou moins la coupelle 50 de façon à donner au jeu J la valeur souhaitée.

Dans une troisième phase de l'actionnement du frein, qui correspond au segment BC sur la figure 3, toute augmentation de l'effort exercé par le conducteur sur la tige de commande 30 engendre une augmentation de la force d'assistance exercée sur le piston, qui se traduit par une augmentation de la réaction à la pédale exercée par le disque 48 sur le plongeur 28, alors au contact l'un de l'autre.

Au-delà du point C sur la figure 3, la pression régnant dans la chambre arrière 18 du servomoteur est égale à la pression atmosphérique et une augmentation de la pression d'assistance n'est plus possible. L'augmentation de la force de sortie exercée par la tige de poussée 46 sur le maître-cylindre est alors sensiblement égale à l'augmentation de la force exercée par le conducteur sur la pédale de frein.

Il est à noter que la courbe de la figure 3 est en elle-même classique et n'a été expliquée ici que pour mieux faire comprendre les avantages présentés par l'invention.

Bien entendu, l'invention n'est pas limitée au mode de réalisation qui vient d'être décrit à titre d'exemple, mais en couvre toutes les variantes. Ainsi, on comprendra aisément que l'invention s'applique à tous les servomoteurs d'assistance au freinage existants, quelle que soit leur structure particulière. Par ailleurs, le capot 50 permettant, dans le mode de réalisation décrit, de régler la précontrainte appliquée sur la partie périphérique du disque de réaction peut être remplacé par tout organe permettant de réaliser un tel réglage et notamment par une plaque vissée sur la face avant du piston 20, de telle sorte que l'écartement entre cette plaque et le piston soit réglable.

## Revendications

1. Servomoteur d'assistance au freinage comprenant une enveloppe extérieure (10) d'axe (X-X) donné, dans laquelle sont montés de façon mobile selon ledit axe, un piston creux d'assistance (20), une tige de commande (30) portant un plongeur (28) logé dans le piston, et une tige de poussée (46), des moyens d'assistance (34, 20a, 28a) logés dans ladite enveloppe étant commandés par un déplacement du plongeur vers l'avant et ayant pour effet de déplacer le piston vers l'avant, un disque de réaction (48) en un matériau déformable étant interposé entre une face avant annulaire (20b) du piston et une face arrière (46a) de la tige de poussée, de telle sorte qu'un jeu (J) est normalement formé au repos entre une face avant (28b) du plongeur et ce disque de réaction, caractérisé par le fait qu'un moyen (50) est prévu pour appliquer sur le disque de réaction (48) une précontrainte réglable entre le face avant annulaire (20b) du piston et la face arrière (46a) de la tige de poussée, de façon à régler ledit jeu (J).

2. Servomoteur selon la revendication 1, caractérisé par le fait que ledit moyen comprend un capot (50) vissé sur le piston (20) autour de la face avant annulaire de ce dernier, ce capot coiffant une plaque (46b) formée sur la tige de poussée (46) et comportant la face arrière (46a) de cette dernière, ainsi que le disque de réaction (48).

## Patentansprüche

1. Bremshilfe-Servomotor, mit einer äußeren Ummantelung (10) mit gegebener Mittelachse (X-X), in der längs der Achse auf bewegliche Weise ein Hilfshohlkolben (20), ein einen im Kolben angeordneten Tauchkolben (28) tragender Steuerstift (30) und ein Druckstift (46) beweglich angebracht sind, wobei in der Ummantelung befindliche Hilfsmittel (34, 20a, 28a) durch eine Vorwärtsverschiebung des Tauchkolbens gesteuert werden und zur Vorwärtsverschiebung des Kolbens eine Gegendruckscheibe (48) aus einem verformbaren Material besitzen, die zwischen eine ringförmige Stirnseite (20b) des Kolbens und eine Rückseite (46a) des Druckstifts eingesetzt ist, derart, daß im unbetätigten Zustand zwischen einer Stirnseite (28a) des Tauchkolbens und dieser Gegendruckscheibe normalerweise ein Spiel (J) ausgebildet wird, dadurch gekennzeichnet, daß ein Mittel (50) vorgesehen ist, um an die Gegendruckscheibe (48) zwischen der ringförmigen Stirnseite (20b) des Kolbens und der Rückseite (46a) des Druckstifts eine einstellbare Vorspannung anzulegen, um so das Spiel (J) einzustellen.

2. Servomotor gemäß Anspruch 1, dadurch gekennzeichnet, daß das Mittel um die ringförmige Stirnseite des Kolbens (20) eine auf den letzteren aufgeschraubte Haube (50) aufweist, die eine am Druckstift (46) ausgebildete Platte (46b) abdeckt und sowohl die Rückseite (46a) dieser letzteren als auch die Gegendruckscheibe (48) enthält.

## Claims

1. Brake booster comprising an outer casing (10) of given axis (X-X), in which are mounted movably in said axis a hollow booster piston (20), a control rod (30) carrying a plunger (28) accommodated in the piston, and a push rod (46), booster means (34, 20a, 28a) accommodated in said casing being controlled as a result of a forward movement of the plunger and having the effect of moving the piston forwards, a reaction disc (48) made of a deformable material being interposed between an annular front face (20b) of the piston and a rear face (46a) of the push rod, in such a way that a play (J) is normally formed, at rest, between a front face (28b) of the plunger and this reaction disc, characterized in that a means (50) is provided for applying an adjustable prestress to the reaction disc (48) between the annular front face (20b) of the piston and the rear face (46a) of the push rod, so as to adjust said play (J).

2. Booster according to Claim 1, characterized in that said means comprises a cover (50) screwed onto the piston (20) around the annular front face of the latter, this cover capping a plate (46b), formed on the push rod (46) and comprising the rear face (46a) of the latter, and the reaction disc (48).

FIG. 1

FIG. 2

FIG. 3

7